Europäisches Patentamt

European Patent Office

Office européen des brevets

(19)

(11) Publication number : **0 452 748 B1**

(12) **EUROPEAN PATENT SPECIFICATION**

(45) Date of publication of patent specification :
09.02.94 Bulletin 94/06

(51) Int. Cl.⁵ : **B01J 19/00, C08F 2/00**

(21) Application number : **91105429.4**

(22) Date of filing : **05.04.91**

(54) **Process for polymerizing a monomer.**

(30) Priority : **05.04.90 JP 90684/90**

(43) Date of publication of application :
**23.10.91 Bulletin 91/43**

(45) Publication of the grant of the patent :
**09.02.94 Bulletin 94/06**

(84) Designated Contracting States :
**DE FR GB NL**

(56) References cited :
**EP-A- 0 230 489**
**DE-A- 3 724 853**
**PATENT ABSTRACTS OF JAPAN vol. 12, no. 283 (C-518)(3130) August 3, 1988 & JP-A-63 62 507 (NGK INSULATORS ) March 18, 1988**

(73) Proprietor : **SHIN-ETSU CHEMICAL CO., LTD.**
**6-1, Ohtemachi 2-chome**
**Chiyoda-ku Tokyo (JP)**

(72) Inventor : **Ohya, Kanki, Kashima Enbi Yushi-ryo**
**3-3-24, Shittechuo, Kamisu-machi**
**Kashima-gun, Ibaraki-ken (JP)**
Inventor : **Kitai, Mikio**
**1216-6, Suifu-cho**
**Mito-shi, Ibaraki-ken (JP)**
Inventor : **Furihata, Toshihico**
**9-8-18, Shettechuo, Kamisu-machi**
**Kashima-gun, Ibaraki-ken (JP)**

(74) Representative : **DIEHL GLAESER HILTL & PARTNER**
**Patentanwälte Postfach 19 03 65**
**D-80603 München (DE)**

## Description

The present invention relates to a process for polymerizing a monomer having an ethylenic double bond in an aqueous medium.

In suspension polymerization and emulsion polymerization of a monomer having an ethylenic double bond such as vinyl chloride in an aqueous medium, an attempt is made to reduce the entire polymerization cycle time to increase production efficiency by such measures as the use of a larger polymerization vessel and curtailing the time required for polymerization per se, for recovery of the unreacted monomer, or for washing the inside of the polymerization vessel.

To reduce the time required for each run of polymerization, it is essential to efficiently remove the heat generated by the polymerization reaction. In addition to a conventional cooling jacket, a reflux condenser has also been utilized for heat removal. The reflux condenser is becoming increasingly large in size, and the ratio of heat removed by the condenser against the total quantity of heat removed is also increasing.

The reflux condenser removes heat by liquefying the gaseous monomer. The vapor-liquid equilibrium of the monomer in the vapor and the liquid phases is broken by the liquefaction, accelerating vaporization of the monomers in the liquid phase. This vaporization inevitably accompanies formation of bubbles on the liquid surface. Bubble formation in turn leads to polymer scale formation in the vapor phase of the polymerization vessel. Polymer particles accompanying the bubbles adhere to the port communicating with the condenser or the feed ports for starting materials. If such polymer particles remain unremoved, they tend to become mixed in the polymerization product of the next run and form fish eyes in the product, deteriorating the quality. Still worse, polymer particles would enter the reflux condenser and form polymer scales to lower the heat removal capacity of the condenser. Polymer scales may also clog pipings to thereby render the reflux condenser inoperable. Such undesirable foaming on the liquid surface is still accelerated as the reflux condenser becomes larger in size. An adequate method of suppressing such foaming is highly awaited.

To reduce the time for recovering unreacted monomer, it is necessary to increase the rate of recovery. However, if the rate is too high, the internal pressure of the polymerization vessel abruptly drops, impairing the vapor-liquid equilibrium. Rapid vaporization of a great amount of monomer dissolved in the polymer particles and the aqueous medium causes foaming, entailing various adverse effects such as scale formation, clogging of the pipes for monomer recovery and breakdown of the vessel operation, similarly as in the case where foaming is caused by the increased rate of heat removal by the reflux condenser. It is therefore desirable to suppress excessive foaming during recovery of unreacted monomer without decreasing the recovery rate.

Composition of reaction mixtures for polymerization varies depending on the type of polymer to be obtained, the degree of polymerization, etc. As the likelihood and timing of bubble formation depend on the composition of the polymerization system, it has been the practice to allow sufficient margins in the operational conditions for safety by decreasing the heat recovery rate by the condenser to a sufficiently low level or decreasing the recovery rate of unreacted monomer based on experience. However, such manipulation would inevitably result in excessive lowering of the condenser capacity or of the rate of recovering unreacted monomer. This was an extremely irrational and unsatisfactory procedure when considered in the light of the initial objective of efficient operation for curtailment of polymerization cycle time. That is, the procedure such as above hampers efficient operation of the reflux condenser and thus restricts reduction of polymerization time. Recovery of unreacted monomer is also retarded excessively, prolonging the recovery operation and the polymerization cycle as a whole, thus impeding production.

To solve the above mentioned problem, there has been proposed a process which carries out polymerization or recovery of unreacted monomer while breaking the bubbles on the liquid surface by a mechanical means provided in the vapor phase portion. (Japanese Pre-examination Patent Publication (KOKAI) No. 56-26908 (1981)).

Use of mechanical means for breaking bubbles not only complicates the structure of polymerization vessel but increases the cost of polymerization apparatus as a whole and is therefore economically disadvantageous.

From DE-A-3724853 there was known a process for removing gas from polyvinyl chloride dispersions. It is described therein the controlling of the bubble formation in a polymerization mixture by adding a solution of an anti-foaming agent to the polymerization dispersion and by controlling the position of the distillation valve. This literature is silent about a connection between the bubble formation and the heat removal by a reflux condenser during the polymerization.

EP-A-0230489 reports on a temperature controlling method for polymerization reactors. In this connection there is only generally described the dependency between heat removal and the bubble formation. Namely, it is mentioned that the purging of the monomer vapor from the condenser may cause a sudden increase in the heat amount removed and thus a foaming of the reaction liquid. The heat is removed from the polymerization reactor by controlling the heat amount removed by the condenser as a control variable, coupled with an intermittent purge of a part of the unreacted monomer vapor from the reflux condenser. This means that this literature does not describe the lowering of the capacity of a reflux condenser in its heat removal on the basis of signals from a bubble sensor.

It is the object of the present invention to provide a process for polymerizing a monomer having an ethylenic double bond in an aqueous medium which process suppresses the formation of bubbles in the polymerization mixture within the polymerization vessel, without impairing the productivity.

This object meets the present invention according to claim 1 by a process for polymerizing a monomer having an ethylenic double bond in an aqueous medium in a polymerization vessel, said polymerization vessel being provided with a sensor for detecting bubbles when their presence on the liquid surface exceeds a predetermined amount, characterized in that when the amount of the bubbles exceeds said predetermined amount, the formation of bubbles is suppressed by lowering the capacity of the reflux condenser in its heat removal on the basis of signals from said bubble sensor indicating the detection of bubbles.

Advantageous embodiments of that process are defined in claims 2 to 4.

The process according to the present invention is reasonable because the presence of bubbles in an amount which is harmless is overlooked, whereas an amount of bubbles which is exceeding the predetermined level is suppressed.

The reflux condenser can be utilized to its fullest capacity for heat removal until the bubble sensor detects bubbles irrespective of the composition of the polymerization system. The rate of recovering unreacted monomer can also be sufficiently raised. And yet, adhesion of polymer scales due to bubble formation, or intrusion or adhesion of materials, the recovery port for the unreacted monomer or various other pipings can be effectively prevented. The time required for the polymerization cycle can therefore be reduced without deteriorating the quality of polymers or causing adverse effects such as clogging of pipes. Thus, the present invention prevents adhesion of polymer scales or clogging of the lines and improves the quality of product polymers, rate of operation of the polymerization apparatus and productivity.

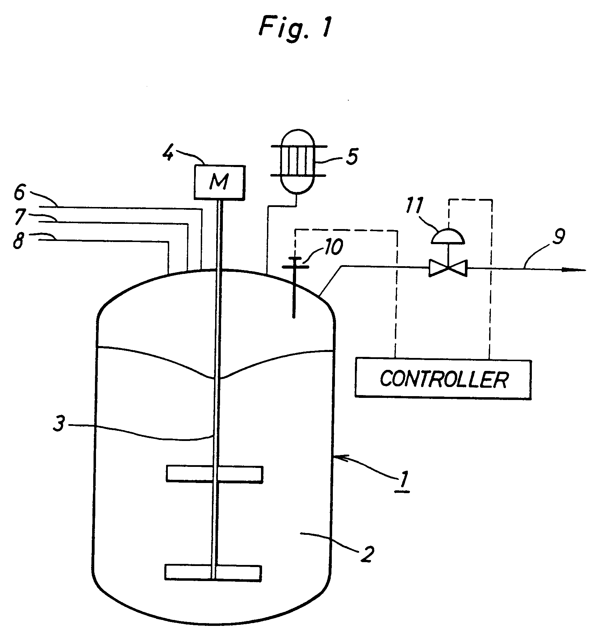

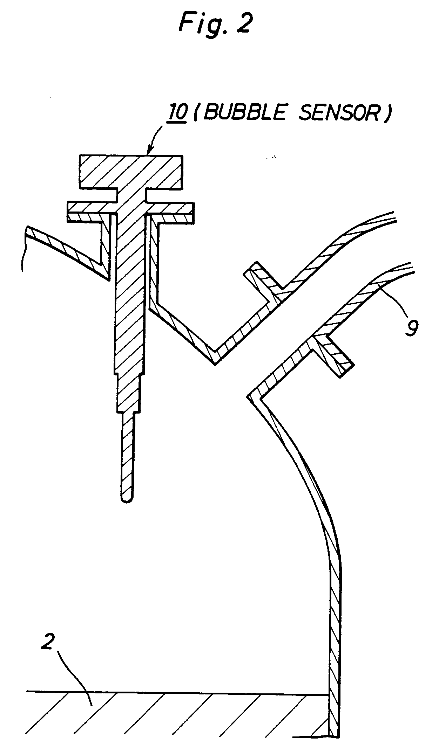

Fig. 1 is a schematic view to show the structure of the polymerization vessel provided with a bubble sensor, and Fig. 2 a partially enlarged view thereof.

## Bubble Sensor

As sensors for detecting bubbles, sensors utilizing capacitance, ultrasonic waves, radiation or infrared rays and electroconductivity cell are available. The electrostatic sensor which detects bubbles by measuring changes in the capacitance between two electrodes is particularly suitable as it can be easily given a simple and explosion-proof structure, and hardly causes adhesion of polymer scales or polymer particles.

As an example of such a sensor, there is one which detects bubbles by measuring the changes in the capacitance between two electrodes by means of a built-in circuit, or of the same principle as that described in Japanese Pre-examination Patent Publication (KOKAI) No. 62-269021 (1987) with respect to a level detection means. Such electrostatic level sensor is available in the market under the commercial name of electrostatic capacity level sensor type DS by Yamamoto Denki K. K.

The bubble sensor according to the present invention is disposed in the vapor phase portion at a height that allows detection of bubbles when the amount thereof exceeds a predetermined limit level, the height being determined by taking into account the distance from the liquid surface and the height of the recovery port for the unreacted monomer and the like. If the bubble sensor is located too near the liquid surface, even a trace of bubbles is detected. This leads to excessive control of foaming and lowers productivity. Conversely, if the sensor is too distant from the liquid surface or too near to the recovery port for the unreacted monomer or the like in the vertical direction, there will be too little time after bubble detection to take measures for suppressing bubbles, and bubbles entailing polymer particles cannot be prevented from entering the recovery port or the like. With commonly known polymerization vessels, the detection unit of the sensor, generally positioned at the bottom of the bubble sensor, should preferably be located at more than 100 mm from the recovery port and at more than 200 mm from the liquid surface respectively, although the distance may depend on the shape and size of the bubble sensor, the volume of the polymerization vessel, etc.

## Method of Suppressing Bubbles

Foaming occurs when the monomer moves from the vapor phase to the liquid phase (vaporization) during polymerization as the vapor-liquid equilibrium within the vessel is lost due mainly to heat removal by the reflux condenser. Foaming at this stage is therefore suppressed by limiting the capacity of the reflux condenser in heat removal. For example, supply of cooling water into the condenser is gradually decreased to limit the heat removed by the condenser until the detection signal from the bubble sensor goes off.

Foaming also occurs when the monomer present in the polymer particles or in the aqueous medium becomes vaporized during recovery of unreacted monomer as the pressure inside the vessel which is approximately 5 - 8 bar G (kg/cm$^2$G) upon completion of polymerization is reduced to ambient pressure. The higher the rate of recovery of unreacted monomer, the more rapidly the pressure inside the vessel lowers to more easily cause foaming. Foaming at this stage is suppressed by limiting the rate of recovering the unreacted monomer. More specifically, the flow control valve is gradually closed from the time when the detection signal from the bubble sensor is emitted until it goes off.

In any of the foregoing cases, measures to suppress foaming are taken in accordance with the detection signal which is emitted from the bubble sensor. This procedure can be carried out manually or can be easily automated. For example, a valve located on the recovery line for the unreacted monomer can be automatically regulated upon receipt of the output signal from the sensor indicating presence of bubbles to control the flow of the unreacted monomer. Similarly, the reflux condenser output can be regulated to control the capacity thereof in heat removal.

## Kinds of Monomers

The present invention process can be suitably used for suspension or emulsion polymerization of monomers having an ethylenic double bond in an aqueous medium. Monomers having an ethylenic double bond include, for example, vinyl esters such as vinyl chloride, vinyl acetate, vinyl propionate; acrylic acid, methacrylic acid and esters or salts thereof; diene monomers such as butadiene, chloroprene and isoprene; and methyl methacrylate, n-butyl acrylate, styrene, acrylonitrile, α-methylstyrene and vinyl ethers. One kind of or a combination of two or more of these monomers may be used in the present invention.

## Other Polymerization Conditions

Other polymerization conditions may be determined routinely depending on the kind of monomer to be polymerized or the type of polymerization process. Therefore, additives that are conventionally used in polymerization systems can be used in the present invention without any restrictions.

The polymerization initiator may be a conventional oil-soluble or water-soluble catalyst for polymerization of vinyl chlorides. Oil-soluble catalysts include percarbonate compounds such as diisopropyl peroxycarbonate, di-2-ethylhexyl peroxydicarbonate, and diethoxyethyl peroxydicarbonate; perester compounds such as t-butyl peroxyneodecanoate, t-butyl peroxypivalate, t-hexyl peroxypivalate, and α-cumyl peroxyneodecanoate; peroxides such as acetylcyclohexyl sulfonyl peroxide, 2,4,4-trimethylpentyl-2-peroxyacetate, 3,5,5-trimethylhexanol peroxide, and lauroyl peroxide; azo compounds such as azobis-2,4-dimethylvaleronitrile, and azobis(4-methoxy-2,4-dimethylvaleronitrile). Water-soluble catalysts include potassium persulfate, ammonium persulfate, hydrogen peroxide, and cumen hydroperoxide. One or a combination of two or more of these catalysts may be used.

Any known agents for dispersing monomers in an aqueous medium may be used in the present invention. They include water-soluble cellulose ethers such as methyl cellulose, ethyl cellulose, hydroxyethyl cellulose, hydroxypropyl cellulose, and hydroxypropylmethyl cellulose; polymers of acrylic acid; water-soluble polymers such as gelatin; oil-soluble emulsifiers such as sorbitan monolaurate, triolate, sorbitanmonostearate, glycerin tristearate, or block copolymers of ethylene oxide propylene oxide; water-soluble emulsifiers such as polyoxyethylene glycerinolate and sodium lauryl sulfate. One or a combination of two or more of these agents may be used.

Other polymerization conditions such as the amount of various additives, the polymerization temperature and the manner of charging the aqueous medium, monomer of vinyl chloride or other comonomer or suspension agents, if necessary, may be selected in accordance with the prior art.

Various other additives used in polymerization of vinyl chlorides such as polymerization modifiers, chain transfer agents, pH control agents, gelatinizing agents, antistats, crosslinking agents, stabilizers, fillers, antioxidants, buffering agents, and scale preventive agents may be suitably added as needed.

The present invention process can be particularly advantageously applied to polymerization systems where foaming easily occurs such as polymerization of vinyl chloride in an aqueous medium and emulsion polymerization of synthetic rubber such as polybutadiene, SBR, NBR, CR, IR and IIR.

## EXAMPLES

The present invention will now be described in detail by referring to examples. The apparatus shown in Fig. 1 was used in Examples and Comparative Examples.

The apparatus as shown in Fig. 1 comprises a polymerization vessel 1, a stirrer 3 for stirring the polymerization liquid 2 charged in said vessel 1 during polymerization, and a motor 4 for driving the stirrer 3. A reflux condenser 5, a supply line 6 for deionized water, a supply line 7 for polymerization initiator, a supply line 8 for monomer and a recovery line 9 for unreacted monomer are connected at the top of the vessel 1. A bubble sensor 10 is so disposed that its bottom is positioned lower than any of the supply ports and the recovery port and at 200 mm above the surface of the polymerization liquid. The bubble sensor 10 used in Examples and Comparative Examples was an electrostatic capacity sensor Type DS manufactured by Yamamoto Denki K. K.

In the apparatus of Fig. 1, rate of recovering unreacted monomer can be regulated by a signal transmitted from the bubble sensor 10 to a controller, and the controller emits signal for opening/closing a flow control valve 11 provided on the recovery line 9 in response to the signal from the sensor 10. It is also possible to manually add a defoaming agent, if necessary. In Examples and Comparative Examples, the valve 11 was manually adjusted based on the detection signal from the bubble sensor 10.

Example 1

The bubble sensor was attached to the polymerization vessel so that its bottom is positioned 100 mm below the recovery port.

Into a 2,000 liter polymerization vessel of stainless steel provided with a reflux condenser (transfer area: 4.5 m²) were charged 910 kg of deionized water, 410 g of a partially saponified polyvinyl alcohol and 280 g of di-2-ethylhexyl peroxydicarbonate. After exhausting the air from the vessel, 700 kg of vinyl chloride monomer was charged. The mixture was heated to 57°C under stirring to initiate polymerization. After two hours from the start of polymerization, the reflux condenser was actuated to remove heat at the rate of 42,000 kcal/hour. At five hours thereafter, the bubble sensor 10 detected bubbles. When the rate of heat removal was gradually decreased to 25,000 kcal/hour, there were hardly any bubbles detected. Heat removal was continued at 25,000 kcal/hour until the polymerization was completed. As the pressure inside the vessel decreased to 6.0 kg/cm²G, the reaction was suspended and the unreacted monomer was recovered at the initial rate of 1.5 Nm³/min. At 11 minutes after recovery was started, the bubble sensor detected presence of bubbles (internal pressure of the vessel at this stage was 3.0 kg/cm²G). As the recovery rate was gradually decreased, hardly any bubbles were detected when the rate reached 0.5 Nm³/min. Recovery operation was continued at the rate of 0.5 Nm³/min until the internal pressure of the vessel reached 0 kg/cm²G.

Comparative Example 1

Polymerization and recovery of unreacted monomer were conducted in the same manner as in Example 1 except that heat removal was started two hours after the polymerization started and continued until the reaction was completed, using the reflux condenser at the rate of 42,000 kcal/hour.

Comparative Example 2

Polymerization and recovery of unreacted monomer were conducted in the same manner as in Example 1 except that heat removal was started two hours after the polymerization started and continued until the reaction was completed, using the reflux condenser at the removal rate of 25,000 kcal/hour. Recovery of unreacted monomer was carried out at the recovery rate of 0.5 Nm³/min throughout the operation.

Comparative Example 3

Polymerization and recovery of unreacted monomer were conducted in the same manner as in Example 1 except that heat removal was started two hours after the polymerization started and continued until the reaction was completed, using the reflux condenser at the removal rate of 42,000 kcal/hour. Unreacted monomer was recovered at the rate of 1.5 Nm³/min throughout the operation. However, when the internal pressure of the vessel reached 2.0 kg/cm²G during recovery of unreacted monomer, evacuation of the air from the unreacted monomer became impossible and the recovery operation had to be suspended.

In Examples 1 and 2 and Comparative Examples 1 through 3, the inside of the reflux condenser and the the recovery line for unreacted monomer were examined for scale deposition. Table 1 shows the results and the time required for recovery of unreacted monomer.

Table 1

| | Scale deposition inside condenser | Scale deposition in recovery line for unreacted monomer | Time required for recovering unreacted monomer |
|---|---|---|---|
| Example 1 | None | None | 25 min |
| Comparative Example 1 | Deposition of some polymer particles in condenser duct | Deposition of some polymer particles in recovery line | 25 min |
| Comparative Example 2 | None | None | 60 min |
| Comparative Example 3 | Deposition of scale in condenser duct | Clogging of control valve in recovery line by scattered PVC | Recovery not possible |

## Claims

1. A process for polymerizing a monomer having an ethylenic double bond in an aqueous medium in a polymerization vessel, said polymerization vessel being provided with a sensor for detecting bubbles when their presence on the liquid surface exceeds a predetermined amount, characterized in that when the amount of the bubbles exceeds said predetermined amount, the formation of bubbles is suppressed by lowering the capacity of the reflux condenser in its heat removal on the basis of signals from said bubble sensor indicating the detection of bubbles.

2. A process of Claim 1, characterized in that said capacity of the reflux condenser is lowered by gradually decreasing the supply of cooling water into said condenser.

3. A process of Claim 2, characterized in that the supply of cooling water is gradually decreased manually.

4. A process of Claim 2, characterized in that the supply of cooling water is gradually decreased automatically.

## Patentansprüche

1. Verfahren zur Polymerisation eines Monomeren mit einer ethylenischen Doppelbindung in einem wäßrigen Medium in einem Polymerisationsgefäß, wobei das Polymerisationsgefäß mit einem Sensor zum Nachweis von Blasen, sofern deren Auftreten auf der Flüssigkeitsoberfläche eine vorbestimmte Menge übersteigt, versehen ist, dadurch gekennzeichnet, daß dann, wenn die Menge der Blasen diese vorbe-

6

stimmte Menge übersteigt, die Blasenbildung durch Verringerung der Kapazität des Rückflußkühlers in bezug auf dessen Wärmeabführung vermindert wird, und zwar auf der Basis von Signalen des Blasensensors, die den Nachweis von Blasen erbringen.

2. Verfahren nach Anspruch 1, dadurch gekennzeichnet, daß die Kapazität des Rückflußkühlers gesenkt wird, indem man die Zufuhr von Kühlwasser in den Kühler allmählich vermindert.

3. Verfahren nach Anspruch 2, dadurch gekennzeichnet, daß die Zufuhr von Kühlwasser auf manuelle Weise allmählich verringert wird.

4. Verfahren nach Anspruch 2, dadurch gekennzeichnet, daß die Zufuhr von Kühlwasser in automatischer Weise allmählich verringert wird.

**Revendications**

1. Procédé de polymérisation d'un monomère ayant une double liaison éthylénique dans un milieu aqueux contenu dans un récipient de polymérisation, ledit récipient de polymérisation étant équipé d'un détecteur servant à détecter des bulles lorsque leur présence à la surface du liquide dépasse une quantité prédéterminée, caractérisé en ce que, lorsque la quantité des bulles dépasse ladite quantité prédéterminée, la formation de bulles est inhibée par abaissement de la capacité d'évacuation de chaleur du condenseur à reflux en fonction des signaux provenant dudit détecteur de bulles indiquant la détection de bulles.

2. Procédé selon la revendication 1, caractérisé en ce que ladite capacité du condenseur à reflux est abaissée en réduisant progressivement l'apport d'eau de refroidissement dans ledit condenseur.

3. Procédé selon la revendication 2, caractérisé en ce que l'apport d'eau de refroidissement est progressivement réduit à la main.

4. Procédé selon la revendication 2, caractérisé en ce que l'apport d'eau de refroidissement est progressivement réduit automatiquement.

# Fig. 1

## Fig. 2

10 (BUBBLE SENSOR)

9

2